(19) Europäisches Patentamt
European Patent Office
Office européen des brevets

(11) **EP 1 702 909 B1**

(12) **EUROPEAN PATENT SPECIFICATION**

(45) Date of publication and mention
of the grant of the patent:
**11.11.2009 Bulletin 2009/46**

(51) Int Cl.:
***C04B 41/87*** (2006.01)   ***C04B 38/00*** (2006.01)
***B01D 39/20*** (2006.01)   ***F01N 3/022*** (2006.01)

(21) Application number: **06251373.4**

(22) Date of filing: **15.03.2006**

(54) **Ceramic honeycomb structure**

Keramische Wabenstruktur

Structure céramique en nids d'abeilles

(84) Designated Contracting States:
**DE FR**

(30) Priority: **16.03.2005   JP 2005074187**

(43) Date of publication of application:
**20.09.2006   Bulletin 2006/38**

(73) Proprietor: **NGK INSULATORS, LTD.
Nagoya-City, Aichi Pref.   467-8530 (JP)**

(72) Inventors:
• **Yamada, Toshio,
NGK Insulators, Ltd.
Mizuho-ku
Nagoya City
Aichi-ken
467-8530 (JP)**

• **Yamada, Kanji,
NGK Insulators, Ltd.
Mizuho-ku
Nagoya City
Aichi-ken
467-8530 (JP)**

(74) Representative: **Paget, Hugh Charles Edward et al
Mewburn Ellis LLP
33 Gutter Lane
London
EC2V 8AS (GB)**

(56) References cited:
**EP-A- 0 554 104     WO-A-2004/063125**

• **PATENT ABSTRACTS OF JAPAN vol. 2003, no. 12, 5 December 2003 (2003-12-05) -& JP 2004 075524 A (HITACHI METALS LTD), 11 March 2004 (2004-03-11)**

**Description**

BACKGROUND OF THE INVENTION

Field of the Invention

The invention relates to a ceramic honeycomb structure. More particularly, the invention relates to a ceramic honeycomb structure which exhibits excellent durability and wear resistance of the outer wall and prevents information printed on the surface of the outer wall from being damaged by wear.

Description of Related Art

A honeycomb structure made of ceramics (ceramic honeycomb structure) has been used as a filter (diesel particulate filter: DPF) for trapping particulate (diesel particulate) contained in automotive exhaust gas or a catalyst carrier for supporting a catalyst which purifies nitrogen oxide ($NO_x$), carbon monoxide (CO), hydrocarbon (HC), and the like contained in exhaust gas.

Such a ceramic honeycomb structure includes a honeycomb-shaped cell structure having a plurality of cells forming fluid channels and formed of a porous material. The ceramic honeycomb structure may be used as a catalyst carrier by causing the partition walls of the cells forming the cell structure to support a catalyst.

In recent years, exhaust gas regulations have been increasingly tightened. In order to deal with a reduction in fuel consumption and an increase in output, a reduction in pressure loss of a catalyst carrier and a filter and an increase in exhaust gas purification performance have been demanded. In order to satisfy such demands, it is necessary to reduce the pressure loss by reducing the thickness of the cell partition wall and to improve the purification performance by activating the catalyst immediately after starting the engine.

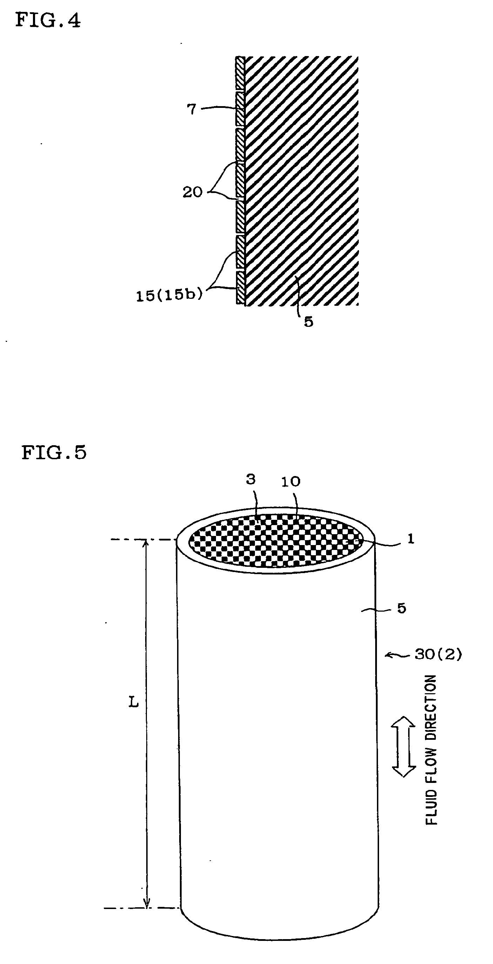

A ceramic honeycomb structure having such a structural feature exhibits low mechanical strength due to a reduction in thickness of the partition wall and an increase in porosity. Therefore, a reinforcement means is disposed in order to improve the mechanical strength and prevent deformation or breakage during use. As shown in FIG. 5, a method of improving the mechanical strength of the ceramic honeycomb structure has been proposed by providing an outer wall 5 over the outer circumference of a cell structure 1 of the honeycomb structure or by disposing a reinforcement layer (coating layer) formed by a specific reinforcement material (see patent documents 1 to 7).

However, the honeycomb structures disclosed in the patent documents 1 to 7 may exhibit insufficient thermal impact resistance. Therefore, a ceramic honeycomb structure exhibiting improved thermal impact resistance has been disclosed in which the thermal expansion coefficient of the outer circumferential wall portion is smaller than the thermal expansion coefficient of the cell wall portion (see patent documents 8 and 9). However, since the ceramic honeycomb structures disclosed in the patent documents 8 and 9 may exhibit insufficient durability and wear resistance of the outer circumferential wall portion (outer wall), further improvement is required. In the case where information such as a product number is printed on the outer wall surface, the print information may be damaged by wear or the like, whereby it may become difficult to identify the information.

[Patent document 1] JP-B-51-44713

[Patent document 2] JP-UM-A-50-48858

[Patent document 3] JP-UM-A-53-133860

[Patent document 4] JP-UM-A-63-144836

[Patent document 5] Japanese Patent No. 2613729

[Patent document 6] JP-A-2004-175654

[Patent document 7] JP-A-2004-231506

[Patent document 8] JP-A-2004-75523

[Patent document 9] JP-A-2004-75524

SUMMARY OF THE INVENTION

The invention was achieved in view of the above-described problems of the prior art technology. An object of the invention is to provide a ceramic honeycomb structure which prevents ceramic particles forming the outer wall from being removed from the outer wall, exhibits excellent durability and wear resistance, and prevents information printed on the outer wall surface from being damaged by wear.

The inventors of the invention conducted extensive studies in order to achieve the above object. As a result, the inventors found that the above object can be achieved by forming the outer wall on the outer circumferential surface of the ceramic honeycomb structure using a coating material including ceramic particles (average particle size: 20 to 50 $\mu$m), and reducing the porosity of the portion outer than the center portion of the outer wall in the thickness direction in comparison with the porosity of the center portion. This finding has led to the completion of the invention.

According to the invention, the ceramic honeycomb structure as set out in claim 1 can be provided.

In the ceramic honeycomb structure preferably the outer wall has a thickness of 300 $\mu$m to 5 mm.

Preferably the ceramic particles include at least one type of ceramics selected from cordierite, alumina, mullite, silica, lithia, aluminum titanate, and silicon carbide.

The ceramic honeycomb structure may include a continuous or discontinuous surface dense layer having a thickness of 1 to 50 $\mu$m on at least a part of an outer circumferential surface of the outer wall.

The ceramic honeycomb structure, may comprise a permeation dense layer having a thickness of 10 to 300 $\mu$m and formed by causing the coating material to permeate an outer circumferential portion of the outer wall.

A length of the surface dense layer in a cross section intersecting a fluid flow direction at right angles may be 60% or more of a perimeter of the outer wall in a cross section intersecting the fluid flow direction at right angles.

The surface dense layer may be a layer formed by drying and optionally firing a coating layer including colloidal silica or colloidal alumina as a major component.

The permeation dense layer may be a layer formed by drying and optionally firing a coating layer including colloidal silica or colloidal alumina as a major component.

The ceramic particles included in the coating material preferably have a 90% particle size of 150 $\mu$m or less.

The ceramic honeycomb structure according to the invention prevents the ceramic particles forming the outer wall from being removed from the outer wall, and exhibits excellent durability and wear resistance. Moreover, the ceramic honeycomb structure according to the invention prevents information printed on the outer wall surface from being damaged by wear.

BRIEF DESCRIPTION OF THE DRAWING

FIG. 1 is a cross-sectional view schematically showing one embodiment of a ceramic honeycomb structure according to the invention.

FIG. 2 is an enlarged view of the section A shown in FIG. 1.

FIG. 3 is a partially enlarged cross-sectional view schematically showing another embodiment of the ceramic honeycomb structure according to the invention.

FIG. 4 is a partially enlarged cross-sectional view schematically showing still another embodiment of the ceramic honeycomb structure according to the invention.

FIG. 5 is a perspective view showing an example of a DPF.

FIG. 6 is a cross-sectional view of a cell structure cut along a plane perpendicular to the fluid flow direction.

FIG. 7 is a cross-sectional view of a ceramic honeycomb structure cut along a plane perpendicular to the fluid flow direction.

FIG. 8 is an electron micrograph of a microstructure at the cross section of the ceramic honeycomb structure cut along the fluid flow direction.

FIG. 9 is an electron micrograph of a microstructure at the cross section of the ceramic honeycomb structure cut along the fluid flow direction.

FIG. 10 is an example of an electron micrograph of a microstructure at the cross section of a ceramic honeycomb structure of an example cut along the fluid flow direction.

DETAILED DESCRIPTION OF THE EMBODIMENT

Preferred embodiments of the invention are described below. Note that the invention is not limited to the following embodiments. Various modifications and improvements may be made in the embodiments within the scope of the invention based on knowledge of a person skilled in the art.

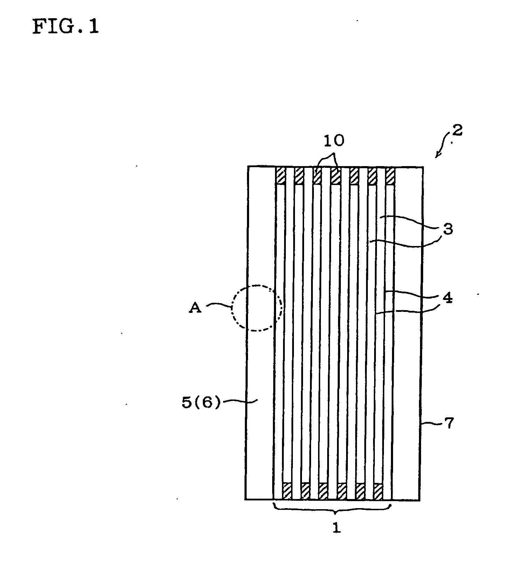

FIG. 1 is a cross-sectional view schematically showing a ceramic honeycomb structure according to one embodiment of the invention. As shown in FIG. 1, a ceramic honeycomb structure 1 according to this embodiment includes a cell structure 1 including a plurality of cells 3 partitioned by porous partition walls 4 and forming fluid channels, and an outer wall 5 disposed on the outer circumferential surface of the cell structure 1. The material for the cell structure 1 is not particularly limited. Since the partition wall 4 must be porous, a sintered product of ceramics such as cordierite, silicon carbide, silicon nitride, alumina, mullite, zirconia, zirconium phosphate, aluminum titanate, lithia, or titania is suitably used. In particular, a sintered product of cordierite is preferable due to a low thermal expansion coefficient and excellent thermal impact resistance and mechanical strength. FIG. 1 shows a state in which plugging sections 10 are disposed in arbitrary cells 3. Note that the plugging section 10 need not be disposed when using the ceramic honeycomb structure 1 as a catalyst carrier.

The outer wall 5 is a coating material including ceramic particles, and may be formed by forming an outer circumference coating layer 6 so that the outer circumferential surface of the cell structure is surrounded by the coating layer 6, drying the coating layer 6, and optionally firing the dried coating layer 6, for example. The ceramic particle included in the coating material is preferably formed of at least one type of ceramics selected from the group consisting of cordierite, alumina, mullite, silica, lithia, and silicon carbide. The affinity between the cell structure 1 and the coating material can be improved by appropriately selecting the material for the ceramic particle corresponding to the material for the cell structure 1 to which the coating material is applied.

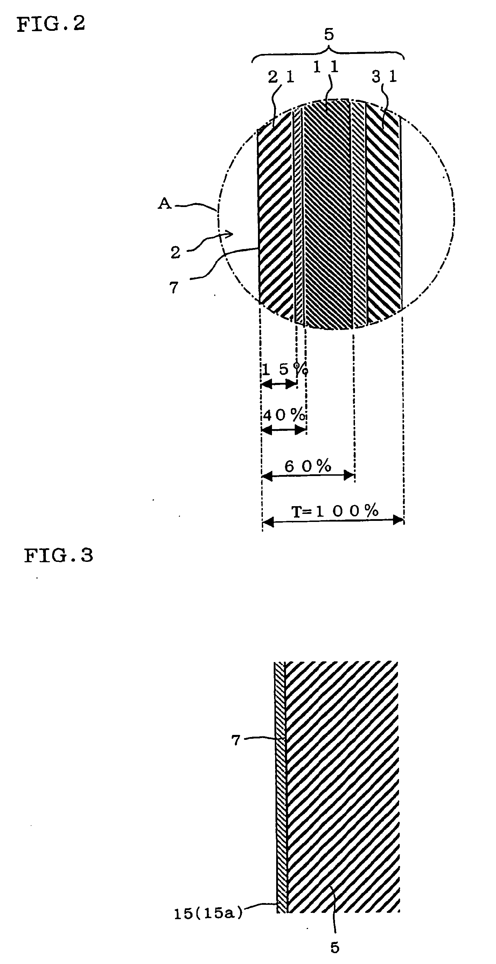

The term "center portion of the outer wall" used herein refers to a portion positioned in the range of 40 to 60% of the thickness of the outer wall 5, as shown in FIG. 2 which is an enlarged view of the section A shown in FIG. 1. The term "portion of the outer wall positioned on the outer side of the center portion" used herein refers to a portion positioned in the range from the outer circumferential surface 7 to 15% of the thickness of the outer wall 5. The term "thickness of the outer wall" used herein refers to the distance between the envelope of the outer circumference of the cell structure (not shown) and the outer circumferential surface 7 of the outer wall 5.

In the ceramic honeycomb structure 2 (see FIG. 2) according to this embodiment, the portion (outer portion 21) of the outer wall 5 positioned on the outer side of the center portion 11 in the thickness direction of the outer wall 5 has a porosity lower than the porosity of the center portion 11. Specifically, in the ceramic honeycomb structure 2 (see FIG. 2) according to this embodiment, the outer portion 21 of the outer wall 5 is densely formed in comparison with the center portion 11. The ceramic particles making up the outer wall 5 are rarely removed from the outer wall 5 since the outer wall 5 of the ceramic honeycomb structure 2 according to this embodiment is formed as described above, whereby the ceramic honeycomb structure 2 exhibits excellent durability and wear resistance. Even if the ceramic honeycomb structure 2 is packaged or placed in a specific container in a state in which information such as a product number is printed on the surface of the outer wall 5, the printed information is rarely damaged by wear, whereby the printed information can be identified for a long time. A reference numeral 31 in FIG. 2 indicates the inner portion of the outer wall 5.

A measurement method for the "porosity" used herein is described below. A measurement target ceramic honeycomb structure is cut along the fluid flow direction to expose a specific analysis cross section. The "porosity" is determined by subjecting a micrograph of the analysis cross section to image analysis using commercially available image analysis software such as "WinROOF" (Mitani Corporation). The image analysis procedure is as follows. First, the area (S) of the image analysis field is calculated. The particle area ($S_1$) is then calculated. Substituting the calculated values for the area (S) of the image analysis field and the particle area ($S_1$) in the following expression (1) yields the porosity (P (%)).

$$P\ (\%) = (S\text{-}S1)\ /\ S \times 100 \qquad (1)$$

The porosity (%) of the center portion 11 of the outer wall 5 and the porosity (%) of the outer portion 21 of the outer wall 5 can be measured and calculated by setting the image analysis field for the center portion 11 or the outer portion 21 of the outer wall 5 (see FIG. 2). The particle size of the ceramic particle is measured using an X-ray transmission grain size distribution measurement device (e.g. "Sedigraph 5000-02" manufactured by Shimadzu Corporation) which employs the Stokes' sedimentation method as the measurement principle and detects the particle size by an x-ray transmission method. The average particle size or 90% particle size of the ceramic particle can be determined from the resulting particle size distribution. The term "90% particle size" used herein refers to the particle size in the particle size distribution at a cumulative weight of 90% from the smallest particle.

In the ceramic honeycomb structure 2 according to this embodiment, the porosity of the outer portion 21 of the outer wall 5 is lower than the porosity of the center portion 11 of the outer wall 5 in an amount of preferably 1% or more, still more preferably 3% or more, and particularly preferably 5% or more. If the difference in porosity between the outer portion 21 and the center portion 11 is less than 1%, the ceramic particles tend to be removed from the outer circumferential surface 7 of the outer wall 5. As a result, when printing information at a specific position of the outer circumferential surface 7, a printing failure tends to occur. The upper limit of the difference in porosity is not particularly limited. From the viewpoint of substantial production feasibility and the like, the upper limit of the difference in porosity may be 20% or less.

In the ceramic honeycomb structure 2 according to this embodiment, the thickness of the outer wall 5 is preferably 300 $\mu$m to 5 mm, and still more preferably 300 $\mu$m to 3 mm. If the thickness of the outer wall 5 is less than 300 $\mu$m, since ceramic particles having a particle size of about 150 $\mu$m may be included in the coating material, it may be difficult to dispose the outer wall on the cell structure. If the thickness of the outer wall 5 is more than 5 mm, it is difficult to dispose the outer wall in one application. This may also result in an increase in cost due to the necessity of two or more applications.

FIG. 3 is a partially enlarged cross-sectional view schematically showing a ceramic honeycomb structure according to another embodiment of the invention. In the ceramic honeycomb structure according to this embodiment, as shown in FIG. 3, a surface dense layer 15 having a thickness of 1 to 50 $\mu$m and containing only ceramic particles having a particle size of less than 1 $\mu$m is preferably formed on the outer circumferential surface 7 of the outer wall 5. The ceramic particles making up the outer wall can be more reliably prevented from being removed from the outer wall by forming the surface dense layer 15, whereby the durability and the wear resistance of the ceramic honeycomb structure can be further improved. Moreover, printed information can be more reliably prevented from being damaged by wear.

If the thickness of the surface dense layer 15 is less than 1 $\mu$m, the effects achieved by forming the surface dense layer 15 become insufficient. If the thickness of the surface dense layer 15 is more than 50 $\mu$m, large cracks having a width exceeding 25 $\mu$m, separation, and the like may occur in the surface dense layer, whereby a printing failure may easily occur. The thickness of the surface dense layer 15 is preferably 1 to 50 $\mu$m, and still more preferably 1 to 20 $\mu$m. The surface dense layer 15 is preferably formed over the entire outer circumferential surface 7 of the outer wall 5. Note that the surface dense layer 15 may be formed on at least a part of the outer circumferential surface 7. In more detail, the surface dense layer 15 may be formed only in the area for printing the lot number, identification symbol, and the like of the ceramic honeycomb structure.

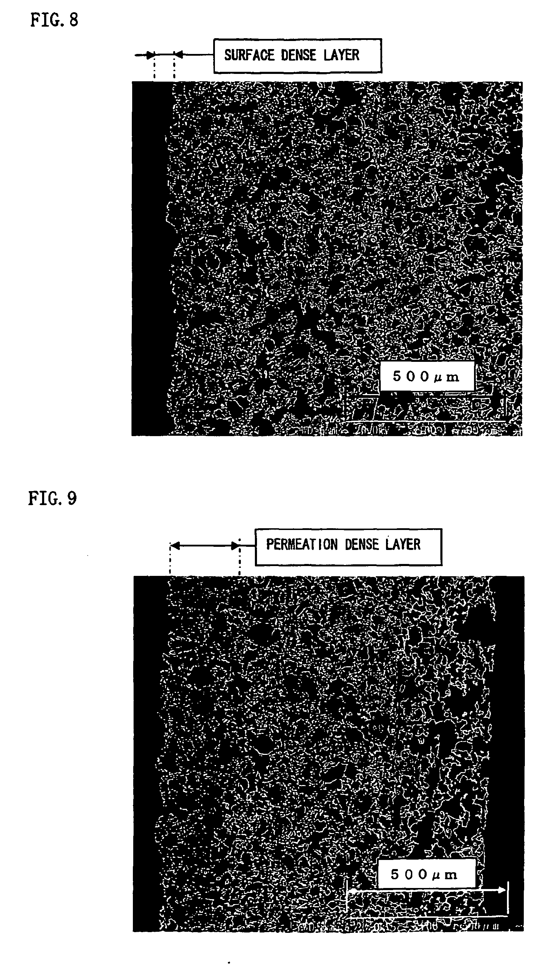

In the ceramic honeycomb structure according to this embodiment, it is preferable to form a permeation dense layer having a thickness of 10 to 300 $\mu$m in the outer circumferential portion of the outer wall, as shown in FIG. 9. The permeation dense layer is formed by causing a coating material containing particles having a particle size of 1 $\mu$m or less to permeate the outer circumferential portion of the outer wall. The ceramic particles making up the outer wall can be more reliably prevented from being removed from the outer wall by forming the permeation dense layer, whereby the durability and the wear resistance of the ceramic honeycomb structure can be further improved. Moreover, printed information can be more reliably prevented from being damaged by wear. If the thickness of the permeation dense layer is less than 10 $\mu$m, the effects achieved by forming the permeation dense layer may become insufficient. If the thickness of the permeation dense layer is more than 300 $\mu$m, cost may be increased. The thickness of the permeation dense layer is preferably 10 to 100 $\mu$m.

FIG. 4 is a partially enlarged cross-sectional view schematically showing a ceramic honeycomb structure according to another embodiment of the invention. As shown in FIG. 4, the surface dense layer 15 of the ceramic honeycomb structure according to this embodiment may be a discontinuous surface dense layer 15b interrupted by minute cracks 20 or the like. The ceramic particles making up the outer wall can be more reliably prevented from being removed from the outer wall by forming the discontinuous surface dense layer 15b, whereby the durability and the wear resistance of the ceramic honeycomb structure can be further improved. Moreover, printed information can be more reliably prevented from being damaged by wear.

Note that the surface dense layer 15 is preferably a continuous surface dense layer 15a (FIG. 3) which is not interrupted by cracks or the like. The term "minute crack 20 formed in the discontinuous surface dense layer 15b (see FIG. 4)" refers to a crack having a maximum width of 25 $\mu$m or less. If the maximum width is more than 25 $\mu$m, printed information may not be sufficiently identified.

FIG. 5 is a view showing an example of a DPF. In the ceramic honeycomb structure 2 (DPF 30) according to this embodiment, it is preferable that the length of the above-described surface dense layer (not shown) in the cross section intersecting the fluid flow direction at right angles be 60% or more, and still more preferably 70% or more of the perimeter of the outer wall in the cross section intersecting the fluid flow direction at right angles. If the length of the above-described surface dense layer is less than 60% of the perimeter of the outer wall, the effects achieved by forming the surface dense layer may become insufficient. It is preferable that the length of the surface dense layer be 100% of the perimeter of the outer wall (i.e. the same as the perimeter of the outer wall) from the viewpoint of further improving the durability and the wear resistance of the entire outer wall and further preventing printed information from being damaged by wear.

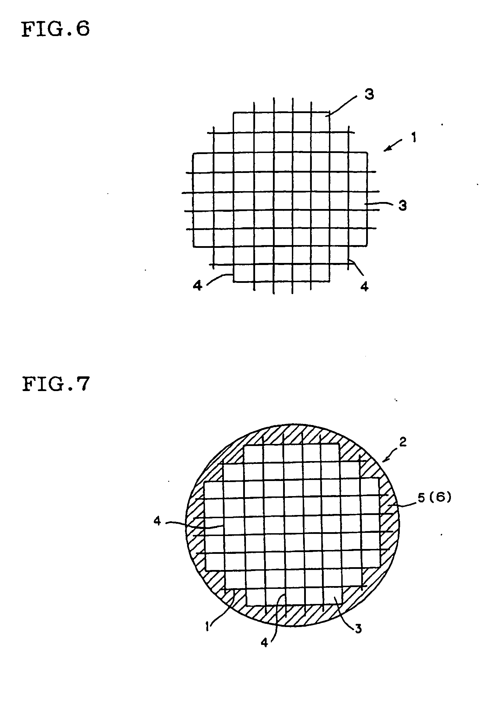

Further details of the ceramic honeycomb structure according to the embodiment of the invention are described below together with an example of its manufacturing method. Clay of which the hardness is adjusted to a suitable value is extruded using a die which allows formation of a desired cell structure, dried, and fired to obtain a sintered product of a honeycomb structure. Then, the outer circumferential portion of the sintered product is removed by grinding using an appropriate grinding method to obtain a cell structure 1 as shown in FIG. 6. Note that the outer circumferential portion of the unfired dried product may be removed by grinding. The cell structure may also be manufactured by bonding the outer circumferential surfaces of cell structure segments.

As shown in FIG. 7, a specific coating material is applied so that the outer circumferential surface of the cell structure 1 is surrounded by the coating material to form an outer circumference coating layer 6. The average particle size of ceramic particles included in the coating material is 20 to 50 $\mu$m. The 90% particle size of the ceramic particles is preferably 150 $\mu$m or less. The average particle size of the ceramic particles is preferably 20 to 40 $\mu$m, and the 90% particle size is more preferably 100 $\mu$m or less. If the average particle size of the ceramic particles is less than 20 $\mu$m, the porosity of the center portion may become lower than the porosity of the outer wall. If the average particle size of the ceramic particles is more than 50 $\mu$m, the flowability of the coating material decreases, whereby the cell structure may not be sufficiently covered. Moreover, the printing properties may be decreased due to a coarse coated surface. If the 90% particle size of the ceramic particles is more than 150 $\mu$m, the printing properties may be decreased due to an increase in unevenness on the surface of the coating. Moreover, since a large amount of a binder such as colloidal silica must be used in order to bond the ceramic particles, the resulting ceramic honeycomb structure may exhibit decreased thermal impact resistance, or the manufacturing cost of the ceramic honeycomb structure may be increased.

When forming the outer circumference coating layer by applying the coating material, the surface of the outer circumference coating layer 6 is pressed using a member such as a spatula while rotating the cell structure 1 so that the outer circumference coating layer 6 having a desired thickness is obtained. In the manufacture of the ceramic honeycomb structure 2 according to this embodiment, the surface of the outer circumference coating layer 6 may be pressed using a member such as a spatula while causing the cell structure 1 to make three or more rotations. The outer portion 21 of the outer wall 5 can be densely formed in comparison with the center portion 11, as shown in FIG. 2, by pressing the surface of the outer circumference coating layer 6 while causing the cell structure 1 to make three or more rotations.

The cross-sectional shape of the cell of the cell structure is not particularly limited. The cross-sectional shape of the cell may be quadrilateral (FIG. 7), polygonal such as triangular or hexagonal, or circular depending on the requirement for the manufacture. Likewise, the cross-sectional shape of the cell structure is not particularly limited. For example, the cross-sectional shape of the cell structure may be circular (FIG. 7), oval, race track shape, elliptical, polygonal such as triangular or quadrangular, or other miscellaneous shapes formed by combining these shapes.

In order to form the surface dense layer 15 as shown in FIGS. 3 and 4 on the outer circumferential surface 7 of the outer wall 5, or to form the permeation dense layer on the outer circumferential portion of the outer wall, a dense layer coating material containing colloidal ceramics such as colloidal silica or colloidal alumina as the major component may be applied to the surface of the dried or semi-dried outer circumference coating layer. The dense layer coating material is applied by a method such as spray coating or brush coating. A surface dense layer 15 or a permeation dense layer (not shown) can be more densely and efficiently formed by increasing the number of applications of dense layer coating material. The surface dense layer and the permeation dense layer may be formed by applying a dense layer coating material to form a coating layer, and drying the coating layer. The coating layer may be allowed to dry or dried using drying means. The coating layer may be fired after drying.

The surface dense layer or the permeation dense layer can be formed by selecting the viscosity of the coating material to be applied. A surface dense layer tends to be formed when the viscosity of the coating material is 0.017 Pa·s or more. A permeation dense layer tends to be formed when the viscosity of the coating material is 0.01 Pa.s or less. The viscosity of the coating material can be easily adjusted by increasing or decreasing the amount of solvent (e.g. water) or adjusting the temperature during application. The surface dense layer and the permeation dense layer can be formed in combination by adjusting the viscosity of the coating material.

The cell structure 1 on which the outer circumference coating layer 6 is formed, as shown in FIG. 7, is dried and fired to obtain the ceramic honeycomb structure 2 according to the embodiment of the invention including the cell structure 1 and the outer wall 5. A ceramic honeycomb structure 2 (DPF 30) as shown in FIG. 5 can be obtained by forming specific plugging sections 10.

EXAMPLES

The invention is described below by way of examples. Note that the following examples should not be construed as limiting the invention.

(Production of cell structure)

A cordierite raw material powder was prepared by mixing talc, kaolin, alumina, silica, and the like so that a cordierite composition ($2MgO \cdot 2Al_2O_3 \cdot 5SiO_2$) was obtained after firing. After the addition of a forming agent, pore-forming agent, and water to the cordierite raw material powder, the components were mixed and kneaded to obtain clay. The resulting clay was extruded and dried to obtain a dried product having a honeycomb structure. After firing the dried product to obtain a sintered product, the outer diameter was adjusted by removing the outer circumferential portion by grinding to obtain a cell structure having an outer diameter of 265 mm. The cell shape of the cell structure was quadrilateral. The wall thickness of the cell was 0.25 mm, and the cell density was 46.5 cell/cm$^2$.

(Examples 1 to 14)

As ceramic particles, cordierite particles having an average particle size of 20 to 50 μm and a 90% particle size of 150 μm or less were provided. The cordierite particles were mixed with colloidal silica, ceramic fiber, and water to prepare a coating material having a viscosity of 13.5 Pa·s. The coating material was applied over the outer circumferential surface of the cell structure using a coating device while pressing the outer circumferential surface using a spatula and causing the cell structure to make three to five rounds to form an outer circumference coating layer. The coating layer was then dried at 25°C for 48 hours to form an outer wall to obtain a ceramic honeycomb structure having an outer diameter of 267 mm, a length of 400 mm, and an outer wall thickness of 1.0 mm (Examples 1 to 14).

(Comparative Examples 1 to 7)

A ceramic honeycomb structure (Comparative Examples 1 to 7) was manufactured in the same manner as in Examples 1 to 14 except for the following items. Specifically, cordierite particles having an average particle size of 10 to 70 μm and a 90% particle size of 170 μm or less were provided as ceramic particles when forming an outer circumference coating layer. The cordierite particles were mixed with colloidal silica and water to prepare a coating material having a viscosity of 13.5 Pa·s. The coating material was applied over the outer circumferential surface of the cell structure while pressing the outer circumferential surface using a spatula and causing the cell structure to make one to four rounds, and dried at 25°C for 48 hours.

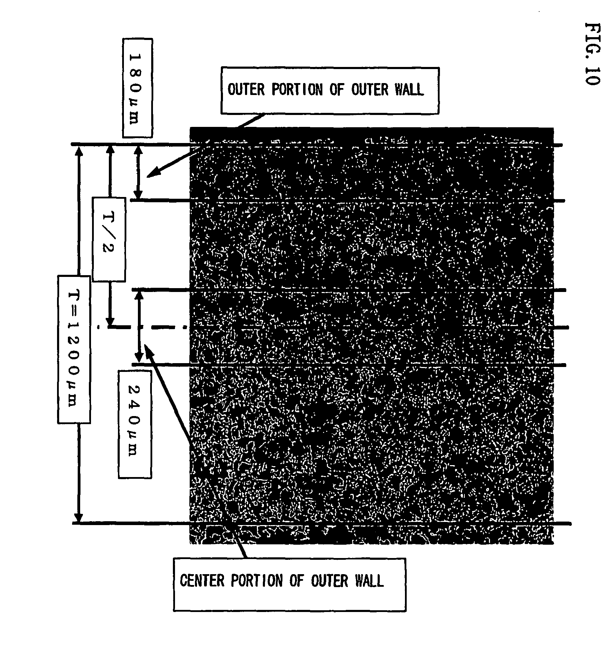

The ceramic honeycomb structures of Examples 1 to 14 and Comparative Example 1 to 7 were cut along the fluid flow direction and filled with a resin. The observation target surface was ground and photographed using an electron microscope (SEM). The magnification for the SEM photograph is not particularly limited insofar as image analysis can be performed. In the examples, the magnification was set at 100. The image analysis area was set at 0.1 to 0.3 mm$^2$. FIG. 10 shows an example of the SEM photograph showing the microstructure at the cross section of the ceramic honeycomb structure of the example cut along the fluid flow direction. The SEM photograph was subjected to image analysis to measure and calculate the porosity (B) of the outer portion and the porosity (A) of the center portion of the outer wall and the porosity difference (A-B). The measurement and calculation results are shown in Table 1.

(Wear resistance test)

The ceramic honeycomb structure (Examples 1 to 14 and Comparative Examples 1 to 7) was cut so that the dimensions of the outer wall surface were 40x40 mm. A portion at the cross section which might be removed was ground and removed using sandpaper (#240) to prepare a test sample. The test sample was processed so that the initial weight was 9±1 g. Photocopying paper ("My Recycle Paper 100 (manufactured by NBS Ricoh Co., Ltd.)) was attached to the surface of a φ200 aluminum plate (rotational plate) of "Refine Polisher HV" (APM-128F (manufactured by Refinetec Co., Ltd.)) using a two-sided adhesive tape. The test sample and a weight (143 g) were placed in this order on the upper surface (paper surface) of the aluminum plate rotated at 20 rpm to start the test. The test sample was removed when one minute had elapsed after starting the test, and the rubbed surface was cleaned using air. Then, the weight of the test sample and the dimensions of the wear surface were measured, and the amount of wear (g) and the amount of wear per unit wear area (mg/mm$^2$) were calculated. The calculated amount of wear was evaluated according to the following criteria.

Excellent: The amount of wear was less than 0.05 mg/mm$^2$. The test sample was worn to only a small extent and poses no practical problem.

Good: The amount of wear was 0.05 mg/mm$^2$ or more and less than 0.15 mg/mm$^2$. The test sample was worn to a small extent and poses no practical problem.

Fair: The amount of wear was 0.15 mg/mm$^2$ or more and less than 0.2 mg/mm$^2$. The test sample was worn to some extent, but poses no practical problem.

Bad: The amount of wear was 0.2 mg/mm$^2$ or more. The test sample was worn to a considerable extent and poses practical problems.

The test sample of Example 6 showed an amount of wear of 0.012 g, dimensions of the wear surface of 9x40 mm, and an amount of wear per unit wear area of 0.033 mg/mm$^2$, and was evaluated as "Excellent". The evaluation results are shown in Table 1.

(Evaluation of outer circumference coating layer)

The condition of the outer circumference coating layer was evaluated according to the following criteria. The evaluation results are shown in Table 1.

Excellent: The coating surface was smooth and flat and showed no irregularities.

Good: Minute cracks occurred although no irregularities on the coating surface were observed and the coating material was not removed. No problem should occur in practical use.

Fair: Although irregularities occurred on the coating surface (recesses having a depth of less than 1.0 mm occurred, but the cell structure was not seen from the outside), no problem should occur in practical use.

Bad: The coating material was removed (recesses having a depth of less than 1.0 mm occurred, and the cell structure was seen from the outside), and problems may occur in practical use.

TABLE 1

| | Ceramic particle | | Number of rotations during coating material application | Porosity (%) | | porosity difference (%) (A-B) | Wear test | Outer circumference coating layer |
|---|---|---|---|---|---|---|---|---|
| | Average particle size (μm) | 90% particle size (μm) | | Center portion of outer wall (A) | Outer portion of outer wall (B) | | | |
| Example 1 | 20 | 70 | 4 | 42.1 | 34.5 | 7.6 | Excellent | Excellent |
| Example 2 | 20 | 80 | 3 | 41.2 | 35.0 | 6.2 | Excellent | Excellent |
| Example 3 | 20 | 80 | 5 | 44.1 | 34.2 | 9.9 | Excellent | Excellent |
| Example 4 | 23 | 90 | 4 | 38.8 | 33.1 | 5.7 | Excellent | Excellent |
| Example 5 | 28 | 95 | 4 | 41.8 | 32.5 | 9.3 | Excellent | Excellent |
| Example 6 | 35 | 95 | 3 | 40.3 | 34.0 | 6.3 | Excellent | Excellent |
| Example 7 | 35 | 95 | 4 | 39.5 | 34.2 | 5.3 | Excellent | Excellent |
| Example 8 | 35 | 95 | 5 | 40.1 | 34.7 | 5.4 | Excellent | Excellent |
| Example 9 | 40 | 100 | 4 | 40.2 | 35.2 | 5.0 | Excellent | Excellent |
| Example 10 | 40 | 110 | 4 | 39.8 | 35.4 | 4.4 | Good | Good |
| Example 11 | 45 | 120 | 4 | 39.5 | 36.5 | 3.0 | Good | Good |
| Example 12 | 48 | 130 | 3 | 38.2 | 36.5 | 1.7 | Fair | Good |
| Example 13 | 50 | 140 | 4 | 37.9 | 36.6 | 1.3 | Fair | Fair |
| Example 14 | 50 | 150 | 4 | 38.1 | 36.8 | 1.3 | Fair | Fair |
| Comparative Example 1 | 10 | 60 | 4 | 36.9 | 39.5 | -2.6 | Bad | Good |
| Comparative Example 2 | 15 | 70 | 3 | 37.5 | 40.0 | -2.5 | Bad | Good |
| Comparative Example 3 | 20 | 80 | 2 | 36.6 | 36.8 | -0.2 | Bad | Good |
| Comparative Example 4 | 35 | 95 | 1 | 38.7 | 39.0 | -0.3 | Bad | Good |
| Comparative Example 5 | 50 | 150 | 1 | 37.0 | 37.6 | -0.6 | Bad | Fair |

(continued)

| | Ceramic particle | | Number of rotations during coating material application | Porosity (%) | | porosity difference (%) (A-B) | Wear test | Outer circumference coating layer |
|---|---|---|---|---|---|---|---|---|
| | Average particle size (μm) | 90% particle size (μm) | | Center portion of outer wall (A) | Outer portion of outer wall (B) | | | |
| Comparative Example 6 | 60 | 160 | 2 | 38.1 | 37.8 | 0.3 | Bad | Bad |
| Comparative Example 7 | 70 | 170 | 1 | 38.2 | 38.2 | 0.0 | Bad | Bad |

(Examples 15 to 22 and Comparative Examples 8 to 11)

Ceramic honeycomb structures of Examples 15 to 22 and Comparative Examples 8 to 11 having a surface dense layer or a permeation dense layer were obtained by applying one of four types of silica sol (1) to (4) (colloidal silica) shown in Table 3 to the outer wall of the ceramic honeycomb structure and drying the applied silica sol at 110°C for 10 minutes using a hot blast. The thickness of the surface dense layer or the permeation dense layer can be arbitrarily adjusted by changing the viscosity and the number of applications of the silica sol. Two or more types of silica sol may be applied in layers, or a mixture prepared by mixing two or more types of silica sol may be applied. It is also easy to select the manufacturing conditions so that both the surface dense layer and the permeation dense layer are formed. After cutting the resulting ceramic honeycomb structure along the fluid flow direction, the cross section was photographed using an electron microscope (SEM), and the thickness of the surface dense layer or the permeation dense layer was measured. The measurement results are shown in Table 2.

The surface dense layer or the permeation dense layer of the resulting ceramic honeycomb structure was evaluated according to the following criteria. The evaluation results are shown in Table 2.

Good: A surface dense layer having an optimum thickness (1 to 50 μm) or a permeation dense layer having an optimum thickness (10 to 500 μm) was formed.

Bad: A surface dense layer or a permeation dense layer was formed, but did not have the optimum thickness.

TABLE 2

| | Ceramic particle | | Number of rotations during coaling material application | Silica sol | Thickness of surface dense layer (μm) | Thickness of permeation dense (μm) | Evaluation result |
|---|---|---|---|---|---|---|---|
| | Average particle size (μm) | 90% particle size (μm) | | | | | |
| Example 15 | 35 | 95 | 4 | Silica sol (1) | 1 | - | Good |
| Example 16 | 35 | 95 | 4 | Silica sol (2) | 5 | - | Good |
| Example 17 | 35 | 95 | 4 | Silica sol(3) | 5 | - | Good |
| Example 18 | 35 | 95 | 4 | Silica sol (4) | 15 | - | Good |
| Example 19 | 50 | 150 | 4 | Silica sol (1) | 50 | - | Good |
| Example 20 | 50 | 150 | 4 | Silica sol (2) | - | 10 | Good |
| Example 21 | 35 | 95 | 4 | Silica sol (3) | - | 30 | Good |
| Example 22 | 35 | 95 | 4 | Silica sol (4) | - | 150 | Good |
| Comparative Example 8 | 23 | 90 | 4 | Silica sol (1) | 0.5 | - | Bad |
| Comparative Example 9 | 35 | 95 | 4 | Silica sol (2) | 0.7 | - | Bad |
| Comparative Example 10 | 35 | 95 | 4 | Silica sol (3) | - | 6 | Bad |
| Comparative Example 11 | 35 | 95 | 4 | Silica sol (4) | - | 6 | Bad |

TABLE 3

| | Product name (manufactured by Nissan Chemical Industries, Ltd.) | Particle size (catalog value) (nm) |
|---|---|---|
| Silica sol (1) | Snowtex 40 | 10 to 20 |
| Silica sol (2) | Snowtex C | 10 to 20 |
| Silica sol (3) | Snowtex N | 10 to 20 |

(continued)

| | Product name (manufactured by Nissan Chemical Industries, Ltd.) | Particle size (catalog value) (nm) |
|---|---|---|
| Silica sol (4) | Snowtex O | 10 to 20 |

(Discussion)

As is clear from Table 1, the outer walls of the ceramic honeycomb structures of Examples 1 to 14 exhibit excellent wear resistance in comparison with the outer walls of the ceramic honeycomb structures of Comparative Examples 1 to 7. As is clear from Table 2, the ceramic honeycomb structures of Examples 15 to 22 include a surface dense layer or a permeation dense layer having the optimum thickness. Therefore, the ceramic honeycomb structures of Examples 15 to 22 are expected to exhibit further improved durability and wear resistance of the outer wall in comparison with the ceramic honeycomb structures of Comparative Examples 8 to 11. It is also expected that printed information can be further prevented from being damaged by wear.

The ceramic honeycomb structure according to the invention exhibits excellent durability and wear resistance of the outer wall and prevents information printed on the surface of the outer wall from being damaged by wear. Therefore, the ceramic honeycomb structure according to the invention is suitable as a DPF or a catalyst carrier.

**Claims**

1. A ceramic honeycomb structure comprising a cell structure (2) which includes a plurality of cells (3) partitioned by porous partition walls (4) and forming fluid channels, and an outer wall (5) disposed on an outer circumferential surface of the cell structure and formed of a coating material including ceramic particles,
   the ceramic particles having an average particle size of 20 to 50 $\mu$m, and an outer portion of the outer wall (5) having a porosity lower than the porosity of a center portion thereof,
   wherein said outer portion extends from the outer circumferential surface (7) of the outer wall (5) to 15% of the thickness direction of the outer wall (5) and said center portion extends from 40% of the thickness direction of the outer wall (5) to 60% of said thickness direction, and
   wherein the difference in the porosity between said center portion of the outer wall (5) and said outer portion thereof is 1% or more, and the method used to determine the porosity is described in the description.

2. The ceramic honeycomb structure according to claim 1, wherein the outer wall (5) has a thickness of 300 $\mu$m to 5 mm.

3. The ceramic honeycomb structure according to claim 1 or 2, wherein the ceramic particles include at least one type of ceramics selected from cordierite, alumina, mullite, silica, lithia, aluminum titanate and silicon carbide.

4. The ceramic honeycomb structure according to any of claims 1 to 3, comprising a continuous or discontinuous surface dense layer (15) having a thickness of 1 to 50 $\mu$m on at least a part of the outer circumferential surface (7) of the outer wall.

5. The ceramic honeycomb structure according to any of claims 1 to 4, wherein said outer wall (5) includes a permeation dense layer having a thickness of 10 to 300 $\mu$m and formed by causing a coating material to permeate an outer circumferential portion of the outer wall (5).

6. The ceramic honeycomb structure according to claim 4, wherein a length of the surface dense layer (15) in a cross section perpendicular to the fluid flow direction in said fluid channels is 60% or more of the perimeter of the outer wall (5) in said cross section.

7. The ceramic honeycomb structure according to any of claims 4 to 6, wherein the surface dense layer (5) is a layer formed by drying and optionally firing a coating layer including colloidal silica or colloidal alumina as a major component.

8. The ceramic honeycomb structure according to claim 5, wherein the permeation dense layer is a layer formed by drying and optionally firing a coating layer including colloidal silica or colloidal alumina as a major component.

9. The ceramic honeycomb structure according to any of claims 1 to 8, wherein the ceramic particles included in the coating material have a 90% particle size of 150 $\mu$m or less.

**Patentansprüche**

1. Keramikwabenstruktur, umfassend eine Zellstruktur (2), die eine Vielzahl von Zellen (3) umfasst, die durch poröse Trennwände (4) getrennt sind und Fluidkanäle bilden, und eine Außenwand (5), die an einer äußeren Umfangsfläche der Zellstruktur angeordnet ist und aus einem Beschichtungsmaterial besteht, welches Keramikteilchen enthält, wobei die Keramikteilchen eine mittlere Teilchengröße von 20 bis 50 $\mu$m aufweisen, und ein Außenabschnitt der Außenwand (5) eine Porosität aufweist, die geringer ist als die Porosität eines Mittelabschnitts derselben, worin sich der Außenabschnitt von der äußeren Umfangsfläche (7) der Außenwand (5) über 15 % der Dickenrichtung der Außenwand (5) erstreckt und sich der Mittelabschnitt von 40 % der Dickenrichtung der Außenwand (5) bis 60 % der Dickenrichtung erstreckt und worin der Unterschied der Porosität zwischen dem Mittelabschnitt der Außenwand (5) und dem Außenabschnitt derselben 1 % oder mehr beträgt und das zur Bestimmung der Porosität eingesetzte Verfahren in der Beschreibung beschrieben ist.

2. Keramikwabenstruktur nach Anspruch 1, worin die Außenwand (5) eine Dicke von 300 $\mu$m bis 5 mm aufweist.

3. Keramikwabenstruktur nach Anspruch 1 oder 2, worin die Keramikteilchen zumindest eine Keramikart umfassen, die aus Cordierit, Aluminiumoxid, Mullit, Silica, Lithiumoxid, Aluminiumtitanat und Siliciumcarbid ausgewählt ist.

4. Keramikwabenstruktur nach einem der Ansprüche 1 bis 3, umfassend eine kontinuierliche oder diskontinuierliche dichte Oberflächenschicht (15) mit einer Dicke von 1 bis 50 $\mu$m auf zumindest einem Teil der äußeren Umfangsfläche (7) der Außenwand.

5. Keramikwabenstruktur nach einem der Ansprüche 1 bis 4, worin die Außenwand (5) eine permeationsdichte Schicht umfasst, die eine Dicke von 10 bis 300 $\mu$m aufweist und gebildet ist, indem ein Beschichtungsmaterial in einen äußeren Umfangsabschnitt der Außenwand (5) eindringen gelassen wird.

6. Keramikwabenstruktur nach Anspruch 4, worin die Länge der dichten Oberflächenschicht (15) in einem Querschnitt orthogonal zur Fluid-Strömungsrichtung in den Fluidkanälen 60 % oder mehr des Umfangs der Außenwand (5) in diesem Querschnitt beträgt.

7. Keramikwabenstruktur nach einem der Ansprüche 4 bis 6, worin die dichte Oberflächenschicht (5) eine Schicht ist, die durch Trocknen und gegebenenfalls Brennen einer Deckschicht gebildet ist, die kolloidales Silica oder kolloidales Aluminiumoxid als Hauptkomponente enthält.

8. Keramikwabenstruktur nach Anspruch 5, worin die permeationsdichte Schicht eine Schicht ist, die durch Trocknen und gegebenenfalls Brennen einer Deckschicht gebildet ist, die kolloidales Silica oder kolloidales Aluminiumoxid als Hauptkomponente enthält.

9. Keramikwabenstruktur nach einem der Ansprüche 1 bis 8, worin die im Beschichtungsmaterial enthaltenen Keramikteilchen zu 90 % eine Teilchengröße von 150 $\mu$m oder weniger aufweisen.

**Revendications**

1. Structure céramique en nid d'abeilles comprenant une structure de cellules (2) qui comprend une pluralité de cellules (3) divisées par des cloisons poreuses (4) et formant des canaux de fluide, et une paroi externe (5) disposée sur une surface circonférentielle externe de la structure de cellules et formée d'un matériau de revêtement comprenant des particules de céramique, les particules de céramique ayant une taille moyenne de particule de 20 à 50 $\mu$m, et une partie externe de la paroi externe (5) ayant une porosité inférieure à la porosité d'une partie centrale de celle-ci, dans laquelle ladite partie externe s'étend de la surface circonférentielle externe (7) de la paroi externe (5) à 15 % de la direction d'épaisseur de la paroi externe (5) et ladite partie centrale s'étend de 40 % de la direction d'épaisseur de la paroi externe (5) à 60 % de ladite direction d'épaisseur, et

dans laquelle la différence de porosité entre ladite partie centrale de la paroi externe (5) et ladite paroi externe de celle-ci est de 1 % ou plus, et le procédé utilisé pour déterminer la porosité est décrit dans la description.

2. Structure céramique en nid d'abeilles selon la revendication 1, dans laquelle la paroi externe (5) a une épaisseur de 300 $\mu$m à 5 mm.

3. Structure céramique en nid d'abeilles selon la revendication 1 ou 2, dans laquelle les particules de céramique comprennent au moins un type de céramique choisi parmi la cordiérite, l'alumine, la mullite, la silice, la lithine, le titanate d'aluminium et le carbure de silicium.

4. Structure céramique en nid d'abeilles selon l'une quelconque des revendications 1 à 3, comprenant une couche dense de surface continue ou discontinue (15) ayant une épaisseur de 1 à 50 $\mu$m sur au moins une partie de la surface circonférentielle externe (7) de la paroi externe.

5. Structure céramique en nid d'abeilles selon l'une quelconque des revendications 1 à 4, dans laquelle ladite paroi externe (5) comprend une couche dense de perméation ayant une épaisseur de 10 à 300 $\mu$m et formée en amenant un matériau de revêtement à s'infiltrer dans une partie circonférentielle externe de la paroi externe (5).

6. Structure céramique en nid d'abeilles selon la revendication 4, dans laquelle une longueur de la couche dense de surface (15) dans une section transversale perpendiculairement à la direction d'écoulement de fluide dans lesdits canaux de fluide est de 60 % ou plus du périmètre de la paroi externe (5) dans ladite section transversale.

7. Structure céramique en nid d'abeilles selon l'une quelconque des revendications 4 à 6, dans laquelle la couche dense de surface (5) est une couche formée en séchant et facultativement en cuisant une couche de revêtement comprenant de la silice colloïdale ou de l'alumine colloïdale comme composant majeur.

8. Structure céramique en nid d'abeilles selon la revendication 5, dans laquelle la couche dense de perméation est une couche formée en séchant et facultativement en cuisant une couche de revêtement comprenant de la silice colloïdale ou de l'alumine colloïdale comme composant majeur.

9. Structure céramique en nid d'abeilles selon l'une quelconque des revendications 1 à 8, dans laquelle les particules de céramique comprises dans le matériau de revêtement ont une taille de particule à 90 % de 150 $\mu$m ou moins.

FIG.1

FIG.2

FIG.3

FIG.4

FIG.5

FIG.6

FIG.7

FIG. 8

SURFACE DENSE LAYER

500 μm

FIG. 9

PERMEATION DENSE LAYER

500 μm

FIG. 10

OUTER PORTION OF OUTER WALL

CENTER PORTION OF OUTER WALL

180μm

240μm

T/2

T=1200μm

**EP 1 702 909 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51044713 B
- JP 50048858 A
- JP 53133860 A
- JP 63144836 A
- JP 2613729 B
- JP 2004175654 A
- JP 2004231506 A
- JP 2004075523 A
- JP 2004075524 A